# NEW EUROPEAN PATENT SPECIFICATION

(11) **EP 1 873 949 B2**
(45) Date of publication and mention of the opposition decision: **02.10.2013**
(45) Mention of the grant of the patent: 28.07.2010
(21) Application number: 05752489.4
(22) Date of filing: 25.04.2005
(51) Int. Cl.: H04W 4/06, H04W 84/08, H04W 4/10

(54) **A CHANNEL SHARING METHOD IN THE CLUSTER MOBILE COMMUNICATION SYSTEM BASED ON CDMA**
KANAL-SHARING-VERFAHREN IM CLUSTER-MOBILKOMMUNIKATIONSSYSTEM AUF DER BASIS VON CDMA
PROCEDE DE PARTAGE DE CANAUX DANS UN SYSTEME DE COMMUNICATIONS MOBILES PAR REGROUPEMENT DE TYPE CDMA

(43) Date of publication of application: 02.01.2008
(73) Proprietor: ZTE Corporation, Guangdong 518057 (CN)
(72) Inventor: LIU, Xuemin ZTE Plaza, Keji Road South, Shenzhen, Guangdong 518057 (CN); YANG, Jiaan ZTE Plaza, Keji Road South, Shenzhen, Guangdong 518057 (CN)
(74) Representative: Pellkofer, Dieter
(86) International application number: PCT/CN2005/000572
(87) International publication number: WO 2006/114017

(56) References cited:
- EP-A- 1 168 873
- EP-A- 1 372 350
- WO-A-03/009617
- WO-A-2004/017525
- CN-A- 1 549 484
- CN-A- 1 549 485
- CN-A- 1 567 783
- CN-A- 1 567 790

## Description

### Technical Field

The present invention pertains to a trunking mobile communication system using CDMA, and more specifically, to a channel sharing method of this trunking mobile communication system.

### Background Art

The CDMA technology of CDMA cellular mobile communication system is a multiple access method based on broadband spread spectrum technology. It is a multiple access modulation technology that is often used in mobile communication with the features such as high spectrum efficiency, anti-interference and no easy interception. All the three systems of CDMA2000, WCDMA, and TD-SCDMA proposed in the third generation of mobile communication standard adopt CDMA technology, so that the third generation of mobile communication system has a much larger capacity and a higher data speed.

The trunking communication system is defined as a dedicated dispatch mobile communication system in which a number of subscribers share one group of wireless channels and dynamically use these channels. This system is a command and dispatch system that has wide applications in departments such as enterprises, mining, oilfield, farms, security, police and army etc., which have a high demand of commanding and dispatching function.

The present trunking mobile communication system combines the cellular communication system and trunking communication system together, therefore, it not only expands the service scope of cellular communication system, but also makes the trunking communication system get rid of the functional and regional limitations of a dedicated dispatching communication system. According to accessing ways, the current trunking mobile communication system can be grouped into two schemes: TDMA (time division multiple access) and CDMA (code division multiple access). However, with a maturely developing communication technology of third generation nowadays, if the cellular communication system uses TDMA scheme, it will then has difficulties of not being able to smoothly progress into the third generation of communication system, as well as capacity limitations and low data throughput, and thereby fails to meet the increasing communication demand. On the other hand, if the CDMA scheme is used, the cellular communication system will then possess a broadband spread spectrum air interface, satisfy the needs of third generation wireless communication system, and it will provide not only the traditional voice service, but high-speed packet data service as well. Therefore, with a combination of a CDMA cellular communication system and a trunking communication system, the number of trunking system subscribers within a single cell will be increased, and furthermore, more new services that possess trunking system features will be developed based on high-speed packet data service.

However, if the trunking mobile communication system is only formed by simply superimposing a trunking communication system on a traditional CDMA cellular communication system, that is to say, it has allocated fully independent forward/reverse service channels for each subscriber of the same group within the trunking system, then it will have a huge impact on the capacity and stability of the entire trunking mobile communication system.

China patent application CN 1545352A "THE LONG-CODE MASK RELIZATION METHOD USED IN THE CHANNEL SHARING" disclosed a channel sharing method which, by allocating the same Walsh code, the same data packet offset and the same long code mask, enables the forward supplementary channel of the same group within the same cell to send the same content based in the same format at the same time, thereby lowers the forward transmitting power and enhances the forward capacity. This method realizes channel-sharing from the respect of power, however, regarding to channel resources, it still allocates an independent forward/reverse service channel for each subscriber without truly realization of channel-sharing. As a result, if there are 100 subscribers within the same group in a single cell, then when trying to realize trunking service such as trunking call, 100 forward channels and 100 reverse channels will be occupied, which leads to a serious waste of channel resources, especially for reverse channel resources. Furthermore, it will add cell interference and limit subscriber capacity within a single cell, and thereby impacts the access capacity of the entire system.

Additionally, WO 03/009617 A (ERICSSON TELEFOIN AB L M [SE]; REFAI WAIL [US]; WITTER ROBERT C [US]; S) 30 January 2003 (2003-01-30), discloses a COMMA wireless communications system that enables push-to-talk and push-to-conference communications.

### Summary of the Invention

The present invention is proposed based on the above technology problems. The object is to provide a channel sharing method of a trunking mobile communication system based on CDMA and thereby fully utilize limited wireless resources in order to support more groups and increase subscriber capacity within a single cell.

This invention relates to a channel sharing method of a trunking mobile communication system based on CDMA. Said trunking mobile communication system comprises a trunking dispatch subsystem, a base station subsystem and mobile stations, wherein the mobile stations can be divided into a talking mobile station that sends voice data packets and multiple listening mobile stations that receive voice data packets. The method comprises the following steps:
the base station subsystem allocates a forward voice sharing channel for all the mobile stations within a group;
the base station subsystem allocates a forward signaling sharing channel for all the mobile stations of the same cell within this group;
the base station subsystem allocates a reverse dedicated voice channel for the talking mobile station within the group;
the base station subsystem allocates a reverse signaling sharing channel for all the listening mobile stations of the same cell within this group.

Preferably, all the mobile stations share the forward voice sharing channel by way of soft handoff.

Preferably, all the listening mobile stations within the same cell share the reverse signaling sharing channel by way of random sending and time division.

Preferably, the method also comprises the following steps: when the talking mobile station converts to the listening mobile station, it needs to release the reverse dedicated > voice channel and sets up the reverse signaling sharing channel which is the same as that of other listening mobile stations within the cell.

Preferably, the method also comprises the following step: when a certain listening mobile station converts to the talking mobile station, it needs to release the reverse signaling sharing channel and sets up the reverse dedicated voice channel.

By using the channel sharing method of present invention, people could effectively utilize the call characteristic of the trunking communication system as well as the code division resources of CDMA system. While maintaining the voice quality of a trunking mobile communication system, this method greatly reduces the demand for channel resources and air channel interference, and increases system capacity.

### Descriptions of Drawings

Figure 1 is a flowchart of the channel sharing method according to one embodiment of the invention;
Figure 2 is a schematic diagram of the channel sharing method in FIG. 1 when setting up trunking calls;
Figure 3 is a schematic diagram of the channel sharing method in FIG. 1 when the talking mobile station releases speaking right;
Figure 4 is a schematic diagram of the channel sharing method in FIG, 1 when the listening mobile stations apply for speaking right.

### Preferred Embodiments

It is believed that the above and other objects, characteristics, and advantages of this invention will be more clearly understood through the detailed description of the following embodiments of the present invention accompanying with the drawings.

The core idea of the channel sharing method of the present invention is as follows: based on the call characteristic of a trunking mobile communication system, namely, at a certain moment, only one mobile station within a group can obtain speaking right and send reverse voice data packets, while other mobile stations within this group do not have the speaking right and can only receive forward voice data packets. Therefore, for all the mobile stations within this group, the base station subsystem of the trunking mobile communication system only needs to allocate resources of two forward channels and two reverse channels to realize trunking service. The four channel resources comprises forward/reverse voice channels and forward/reverse signaling channels, namely, the forward voice sharing channel, the reverse dedicated voice channel, the forward signaling sharing channel and the reverse signaling sharing channel. All the mobile stations within the group, depending on their own status, can share the resources of the four channels.

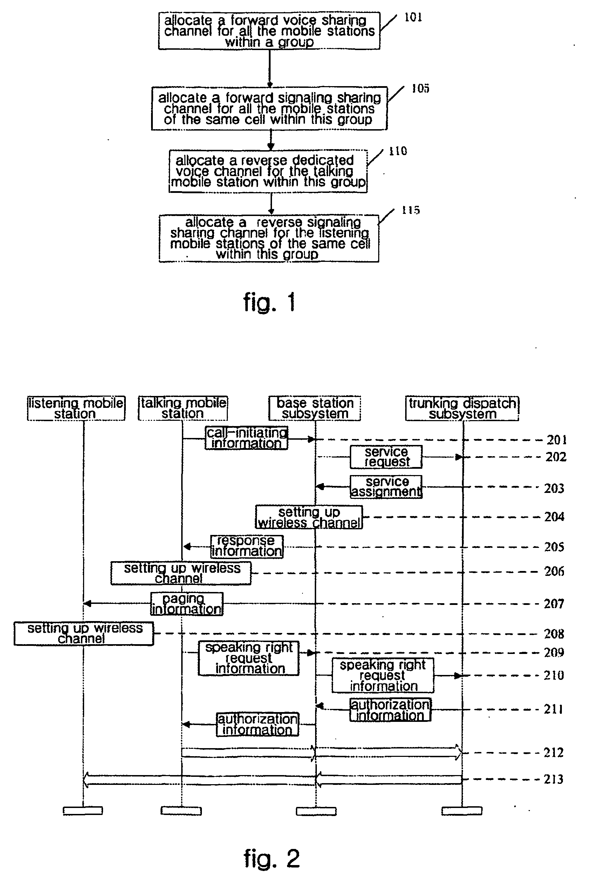

Figure 1 is a flowchart of one embodiment of the channel sharing method of the invention. A trunking mobile communication system based on CDMA usually comprises: a trunking dispatch subsystem (DSS) which is responsible for the management and dispatch of trunking calls; a base station subsystem (BSS) which mainly performs wireless access function and allocates channel resources; mobile stations (MS) which can be divided into two categories according to the characteristic of the trunking call: one category is talking mobile station MS_T that obtains the speaking right and sends voice data packets, the other is multiple listening mobile stations MS_L* that receive voice data packets (* means multiple).

In step 101, the base station subsystem allocates a forward voice sharing channel for all the mobile stations within a group, which means that no matter whether the mobile stations are in the same cell or not, they all share one forward voice sharing channel by which all the mobile stations receive voice data packets. As for the mobile stations from different cells, this forward voice sharing channel can be used by soft handoff method.

In step 105, the base station subsystem allocates a forward signaling sharing channel for all the mobile stations of the same cell within this group. By the forward signaling sharing channel, the subsystem sends the local signaling information relative to the local cell to the mobile stations of the same group within the local cell.

Through the above two steps, the base station subsystem will realize channel resources allocation for all the mobile stations within the group in the forward link.

In step 110, the base station subsystem allocates a reverse dedicated voice channel for the talking mobile station within this group. Since only one mobile station in the reverse link can send voice data packets (namely only one user can talk), the talking mobile station will privately occupy the reverse voice channel in order to transmit reverse voice data packets. These reverse voice data packets are the forward voice data packets transmitted in the forward voice sharing channel.

In step 115, the base station subsystem allocates a reverse signaling sharing channel for the listening mobile stations of the same cell within this group, and the reverse signaling sharing channel is used by the listening mobile stations to send reverse signaling. All the listening mobile stations of this cell can share reverse signaling sharing channel by way of random sending and time division.

Through the above two steps, the base station subsystem can realize allocation of channel resources for all the stations within the group in the reverse link.

For those people skilled in the field, it is easy to know that the above steps of the channel sharing method of the embodiment have no obvious sequence and can be carried out simultaneously.

It can be seen from the above description that by using the channel sharing method of this embodiment, channel resources can be effectively utilized. For a certain group and cell, no matter how many mobile stations there are, only two forward channels and two reverse channels are needed respectively. In forward direction, all the mobile stations receive base station signal, therefore all the forward voice and signaling channels are shared; in reverse direction, the talking mobile station occupies the reverse voice channel and the listening mobile stations share one reverse signaling channel. This dedicated reverse voice channel is only used by the talking mobile station, which can guarantee that signals of other mobile stations will not interfere with the voice signals of the talking mobile station.

Figure 2 is a flowchart of setting up trunking call in the trunking mobile communication system based on CDMA, wherein the channel sharing method of the present invention is used. In this embodiment, it is assumed that all the mobile stations of the group are in the same cell.

In step 201, a certain talking mobile station (MS_T) initiates a group calling, and when the base station subsystem (BSS) receives this call-initiating information from the talking mobile station, it sends service request information to the trunking dispatch subsystem (DSS) (step 202). In step 203, the trunking dispatch subsystem assigns services to the base station subsystem. By way of resource allocation, the base station subsystem builds up corresponding channel resources on the side of base station, including a forward voice sharing channel, a reverse dedicated voice channel, a forward signaling sharing channel and a reverse signaling sharing channel (step 204).

Then in step 205, the base station subsystem sends out calling-response information to the talking mobile station and tells that talking mobile station the resource information of the forward voice sharing channel, reverse dedicated voice channel and forward signaling sharing channel. After receiving the information above, the talking mobile station builds up a forward voice sharing channel, a reverse dedicated voice channel and a forward signaling sharing channel based on the received resource information, and thus realizes the communication with the base station subsystem (step 206).

While the base station subsystem is sending calling-response information to the talking mobile station, in step 207, the base station subsystem sends paging information to multiple listening mobile stations in the group and also tells those stations all the resource information of the forward voice sharing channel, forward signaling sharing channel and reverse signaling sharing channel. In step 208, the listening mobile station builds up a forward voice sharing channel, a forward signaling sharing channel and a reverse signaling sharing channel based on the received resource information, and thus realizes the communication with base station subsystem.

In step 209, the talking mobile station sends out speaking right request information to the base station subsystem through the reverse dedicated voice channel, asking for sending voice data packets. When the base station subsystem receives the information, it forwards the speaking right request information to the trunking dispatch subsystem (DSS) (step 210) which in return sends an authorization information back to the base station subsystem, authorizing the talking mobile station to send voice data packets, namely allowing that subscriber to speak (step 211). In step 212, the base station subsystem forwards the authorization information to the talking mobile station through the forward voice sharing channel, and after being authorized, the talking mobile station will start to send the reverse voice data packets through the reverse dedicated voice channel. The base station subsystem transfer the data packets to the trunking dispatch subsystem (step 213), which in return will distribute the received voice data packets back to base station subsystem, and the base station subsystem will forward the data packets to listening mobile stations through the forward voice sharing channel, and therefore the transmission of voice signals from the talking mobile station to the listening mobile stations is realized.

It can be seen form the above description that for the talking mobile station, the needed channel resources include: a forward voice sharing channel, a reverse dedicated voice channel and a forward signaling sharing channel; for the listening mobile station, the needed resources include: a forward voice sharing channel, a forward signaling sharing channel and a reverse signaling sharing channel; moreover, on the side of base station, the forward voice sharing channels in the channel resource of the talking mobile station and the listening mobile station are the same voice channel, so as the forward signaling sharing channel. In other words, the difference of channel resources between the talking mobile station and the listening mobile station lies in reverse channel resources, namely, the talking mobile station sets up the reverse dedicated voice channel while the listening mobile station sets up the reverse signaling sharing channel.

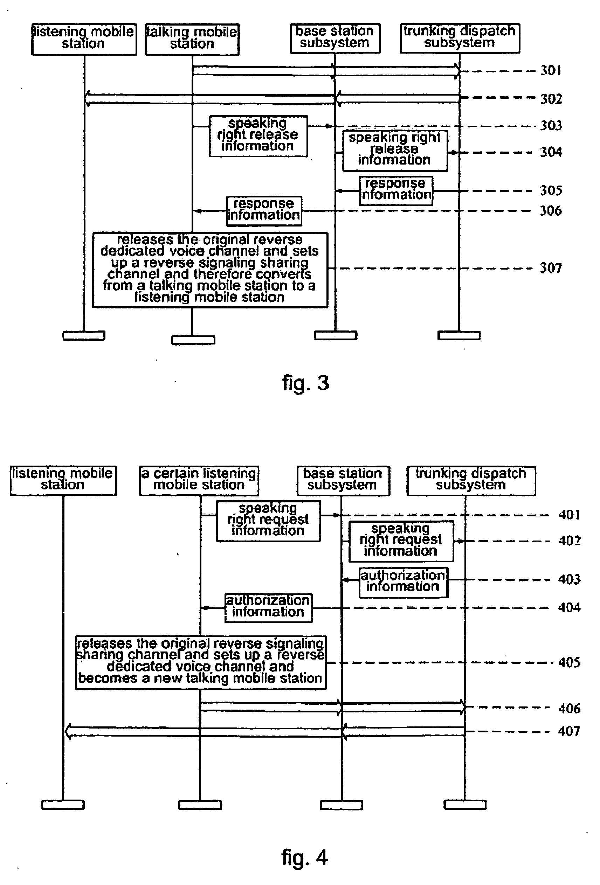

Figure 3 is a schematic diagram of releasing speaking right of the talking mobile station. As shown in figure 3, in step 301, the talking mobile station sends the reverse voice data packets through the reverse dedicated voice channel. The base station subsystem again forwards the data packets to the trunking dispatch subsystem, which distributes the received voice data packets to the base station subsystem, and the base station subsystem again forwards the data packets to the listening mobile stations through the forward voice sharing channel (step 302). When the subscriber stops talking, in step 303, the talking mobile station sends out the information of releasing speaking right to the base station subsystem through the reverse dedicated voice channel, and the base station subsystem forwards this information to the trunking dispatch subsystem (step 304), which will return the response information of "acceptance of releasing speaking right" (step 305), the base station subsystem forwards the information to the talking mobile station through the forward voice sharing channel (step 306). In step 307, the talking mobile station releases the original reverse dedicated voice channel after receiving the response information, and based on the resource information of reverse signaling sharing channel obtained from the forward signaling sharing channel, it will set up a reverse signaling sharing channel and therefore converts from a talking mobile station to a listening mobile station.

After the original talking mobile station releases speaking right, if no new mobile station obtains speaking right, then all the mobile stations at this moment are listening mobile stations and there are no signals of the reverse dedicated voice channel in the reverse direction.

Figure 4 is a schematic diagram of the listening mobile station applying for talking-right. As shown in step 401, when a certain subscriber wants to talk, the listening mobile station sends talking-right request information to the base station subsystem through the reverse signaling sharing channel, and then the base station subsystem will forward the request information to the trunking dispatch subsystem (step 402). In step 403, the trunking dispatch subsystem sends authorization information to the base station subsystem, authorizing the listening mobile station to send out voice data packets, namely allowing the subscriber to talk, thereafter in step 404, the base station subsystem forwards the authorization information to the listening mobile station through the forward voice sharing channel. In step 405, after obtaining the authorization, the listening mobile station releases the original reverse signaling sharing channel, and based on the resource information of the reverse dedicated voice channel obtained through the forward signaling sharing channel, the listening mobile station sets up a reverse dedicated voice channel and becomes a new talking mobile station. After the channel has been successfully set up, the new talking mobile station starts to send out the reverse voice data packets through the reverse dedicated voice channel and the base station subsystem forwards those packets to the trunking dispatch subsystem (step 406), which will again distribute the received packets back to the base station subsystem, and the subsystem will forward the voice data packets to the listening mobile station through the forward voice sharing channel (step 407).

Although the forgoing embodiments describe the situation in which all the mobile stations of one group apply a channel sharing method within the same cell, it also applicable to the situation in which mobile stations of one group are in different cells, in which case, the forward signaling sharing channel and the reverse signaling sharing channel of the mobile stations from different cells are different, and only the forward voice sharing channels are the same channel. When moving, the mobile station decides whether to perform soft handoff or not, based on the neighboring pilot strength obtained by searching and the neighboring channel resources obtained from the forward signaling sharing channel. For instance, the mobile station in cell A detects the high pilot strength in cell B, it will perform soft handoff and join in the forward voice sharing channel in cell B. Thus, the mobile station combines the signals of the forward voice sharing channel from cell A and cell B, realizing diversity gain and improving the quality of the forward voice signals.

### Industrial Applicability

The present invention can be applied to a trunking mobile communication system that uses CDMA system.

## Claims

1. A channel sharing method of a trunking mobile communication system based on CDMA, wherein said trunking mobile communication system comprises a trunking dispatch subsystem, a base station subsystem and mobile stations which can be divided into a talking mobile station for sending voice data packets and multiple listening mobile stations for receiving voice data packets, the method comprising the following steps of:
allocating a forward voice sharing channel for all the mobile stations within a group by the base station subsystem (101);
allocating a forward signaling sharing channel for all the mobile stations of said group within the same cell by the base station subsystem (105);
allocating a reverse dedicated voice channel for the talking mobile station of said group by the base station subsystem (110);
allocating a reverse signaling sharing channel for all the listening mobile stations of said group within the same cell by the base station subsystem (115).

2. The channel sharing method of claim 1, wherein all the mobile stations share the forward voice sharing channel through soft handoff.

3. The channel sharing method of claim 1, wherein all the listening mobile stations within the same cell share the reverse signaling sharing channel through random sending and time division.

4. The channel sharing method of claim 1, wherein the method still comprises the following step: when said talking mobile station needs to convert into a listening mobile station, it releases the reverse dedicated voice channel and sets up the reverse signaling sharing channel which is the same as that of other listening mobile stations within the cell (307).

5. The channel sharing method of claim 1, wherein the method still comprises the following step: when a certain listening mobile station needs to convert into a talking mobile station, it releases the reverse signaling sharing channel and sets up the reverse dedicated voice channel (405).

## Patentansprüche

1. Kanal-Sharing-Verfahren eines Bündelmobilkommunikationssystems auf der Grundlage von CDMA, wobei das genannte Bündelmobilkommunikationssystem ein Bündelabsendeteilsystem, ein Basisstationsteilsystem und Mobilstationen, die in eine sprechende Mobilstation zum Senden von Sprachdatenpaketen und in mehrere hörende Mobilstationen zum Empfangen von Sprachdatenpaketen unterteilt werden können, umfasst, wobei das Verfahren die folgenden Schritte umfasst:
Zuweisen eines Sprach-Sharing-Vorwärtskanals für alle Mobilstationen innerhalb einer Gruppe durch das Basisstationsteilsystem (101);
Zuweisen eines Signalisierungs-Sharing-Vorwärtskanals für alle Mobilstationen der genannten Gruppe innerhalb derselben Zelle durch das Basisstationsteilsystem (105);
Zuweisen eines dedizierten Sprachrückkanals für die sprechende Mobilstation der genannten Gruppe durch das Basisstationsteilsystem (110);
Zuweisen eines Signalisierungs-Sharing-Rückkanals für alle hörenden Mobilstationen der genannten Gruppe innerhalb derselben Zelle durch das Basisstationsteilsystem (115).

2. Kanal-Sharing-Verfahren gemäß Anspruch 1, bei dem alle Mobilstationen den Sprach-Sharing-Vorwärtskanal über Soft Handover gemeinsam nutzen.

3. Kanal-Sharing-Verfahren gemäß Anspruch 1, bei dem alle hörenden Mobilstationen innerhalb derselben Zelle den Signalisierungs-Sharing-Rückkanal über wahlfreies Senden und Zeitmultiplex gemeinsam nutzen.

4. Kanal-Sharing-Verfahren gemäß Anspruch 1, bei dem das Verfahren weiterhin den folgenden Schritt umfasst: Wenn die genannte sprechende Mobilstation in eine hörende Mobilstation umgewandelt werden muss, gibt sie den dedizierten Sprachrückkanal frei und baut den Signalisierungs-Sharing-Rückkanal auf, der derselbe wie der anderer hörender Mobilstationen innerhalb der Zelle ist (307).

5. Kanal-Sharing-Verfahren gemäß Anspruch 1, bei dem das Verfahren weiterhin den folgenden Schritt umfasst: Wenn eine bestimmte hörende Mobilstation in eine sprechende Mobilstation umgewandelt werden muss, gibt sie den Signalisierungs-Sharing-Rückkanal frei und baut den dedizierten Sprachrückkanal auf (405).

## Revendications

1. Procédé de partage de canaux d'un système de communications mobiles par regroupement de type CDMA, dans lequel ledit système de communications mobiles par regroupement comprend un sous-système d'expédition par regroupement, un sous-système de station de base et des stations mobiles qui peuvent être divisées en une station mobile de conversation destinée à envoyer des paquets de données vocales et plusieurs stations mobiles d'écoute destinées à recevoir des paquets de données vocales, le procédé comprenant les étapes suivantes consistant à :
allouer un canal de partage vocal avant pour toutes les stations mobiles à l'intérieur d'un groupe au moyen du sous-système de station de base (101) ;
allouer un canal de partage de signalisation avant pour toutes les stations mobiles dudit groupe à l'intérieur de la même cellule au moyen du sous-système de station de base (105) ;
allouer un canal vocal dédié inverse pour la station mobile de conversation dudit groupe au moyen du sous-système de station de base (110) ;
allouer un canal de partage de signalisation inverse pour toutes les stations mobiles d'écoute dudit groupe à l'intérieur de la même cellule au moyen du sous-système de la station de base (115) ;

2. Procédé de partage de canaux selon la revendication 1, dans lequel toutes les stations mobiles partagent le canal de partage vocal avant par transfert souple.

3. Procédé de partage de canaux selon la revendication 1, dans lequel toutes les stations mobiles d'écoute à l'intérieur de la même cellule partagent le canal de partage de signalisation inverse par envoi aléatoire et répartition dans le temps.

4. Procédé de partage de canaux selon la revendication 1, dans lequel le procédé comprend encore l'étape suivante ; lorsque ladite station mobile de conversation doit être convertie en station mobile d'écoute, elle libère le canal vocal dédié inverse et règle le canal de partage de signalisation inverse qui est le même que celui d'autres stations mobiles d'écoute à l'intérieur de la cellule (307).

5. Procédé de partage de canaux selon la revendication 1, dans lequel le procédé comprend encore l'étape suivante : lorsqu'une certaine station mobile d'écoute doit être convertie en une station mobile de conversation, elle libère le canal de partage de signalisation inverse et règle le canal vocal dédié inverse (405).
